(19) Europäisches Patentamt
European Patent Office
Office européen des brevets

(11) EP 2 902 139 A1

(12) **EUROPEAN PATENT APPLICATION**
published in accordance with Art. 153(4) EPC

(43) Date of publication:
**05.08.2015 Bulletin 2015/32**

(21) Application number: **13841206.9**

(22) Date of filing: **16.09.2013**

(51) Int Cl.:
***B23B 1/00*** *(2006.01)* ***B23B 27/00*** *(2006.01)*
***B23C 5/00*** *(2006.01)*

(86) International application number:
**PCT/RU2013/000802**

(87) International publication number:
**WO 2014/051465 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.09.2012 RU 2012141178**

(71) Applicants:
- **Melnikov, Mikhail Borisovich**
**Chelyabinskaya oblast, g. Snezhinsk 456770 (RU)**
- **Melnikov, Boris Andreevich**
**Chelyabinskaya oblast, g. Snezhinsk 456770 (RU)**

(72) Inventors:
- **Melnikov, Mikhail Borisovich**
**Chelyabinskaya oblast, g. Snezhinsk 456770 (RU)**
- **Melnikov, Boris Andreevich**
**Chelyabinskaya oblast, g. Snezhinsk 456770 (RU)**

(74) Representative: **Sloboshanin, Sergej et al**
**von Füner Ebbinghaus Finck Hano**
**Mariahilfplatz 3**
**81541 München (DE)**

# (54) CUTTING METHOD AND CUTTING TOOL FOR CARRYING OUT SAME

(57) The invention relates to metal machining with metal cutting machines and can be used for machining of hard-to-machine materials, in particular of special steels, aluminium alloys, titanium alloys and other materials.

Cutting machining method comprises preparatory adjustment of the position of a cutting member in a tool body with respect to a workpiece, movement of the tool with respect to a workpiece in the direction of primary motion, and longitudinal feed of the tool, whereby the preparatory adjustment of the cutting member is realized by arrangement of the cutting member first at right angle to a work surface being rotated about its cutting edge point by an angle $\eta$ = 30 - 60° with respect to a feed plane in the plane of primary motion, and then rotating by an angle $\tau$ = 5-60° in the feed plane to the side opposite to the feed direction, with subsequently rotating by an angle $\rho$ = 1 - 30° anticlockwise about its longitudinal axis towards a decrease in the back clearance angle of a blade, an edge angle of the blade is set within the range of $\beta 0$= 60 - 90°. The cutting member can be configured in the form of a cutting plate or a cutting rod. The cutting tool can be configured as a straight-turning cutter, a thrust cutter, a boring cutter, a parting-off cutter, a thread cutter, face-milling cutter.

The technical result to be achieved is the increase of cutting tool durability and of the quality during machining hard-to-machine materials.

Independent claim 2, dependent claim 3, 5 tables, 36 figures.

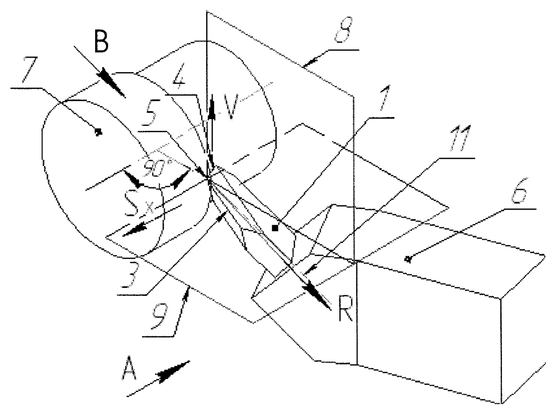


FIG. 1

EP 2 902 139 A1

## Description

### FIELD OF APPLICATION

The invention relates to metal machining with metal cutting machines and can be used for machining of hard-to-machine materials, in particular of special steels, aluminium alloys, titanium alloys and other materials.

### PRIOR ART

Science and technology employ various tools and methods for cutting as disclosed in, for example, RU 2163857, US 20020170396, RU 2015861, RU 2334592 , RU 2206433, US 6343898, JP 61 - 226202, US 4572042, US 2849787, US 6579042, DE 10027945, DE 3910288, RU 2348492, RU 2348491, UA 42003, SU 93920, SU 1006072. A common problem of the known art is insufficient quality of machining and insufficient tool durability in the process of cutting hard-to-machine materials.

Additionally to the abovementioned prior art, a method of machining shaped surfaces by turning is known, wherein the temperature is stabilized by changing the primary cutting angle in projection by rotating the cutter about the axis that passes through the centre of the radial sector at its cutting edge point, whereby the cutter can be rotated together with the upper support of the machine (patent RU 2266175, 2005).

The known method has the drawback that significant deformation of the cut-off layer takes place due to restricted chip formation towards the centre of curvature of the cutting edge, and due to high values of specific cutting forces applied to the edge that is located on a normal towards the direction of cutting speed. As a result, cutting process requires high energy costs and the tool has low durability especially during cutting hard-to-machine materials.

According to a method of the closest prior art, a workpiece and a tool are provided with a possibility of relative movement of shape formation, and the cutter is being fed stepwise, whereby in each cycle after repositioning the cutter in the direction of the feed movement and after cutting off a layer of metal of the first cutting pass, it is additionally repositioned by a prefixed value; additional repositioning is carried out by screw-rotation of the cutter plate about vertical axis in the direction of the cutting edge point cutting-in into envelope of metal (patent UA 11733, 2006).

The above method has the drawback that a significant force load is being applied on the cutting edge, which lowers the durability of the cutter especially in the process of cutting hard-to-machine materials. Moreover, stepwise feed of the cutter is accompanied by a compromised quality of the machined surface.

Also known is a cutting tool, comprising a body, cutting and support plates both having an axis of symmetry, and a means for securing a cutting plate on the body, whereby the cutting plate has a front surface, a lower support surface opposite to it, and side support surfaces, and is mounted and secured on a support plate in a seat restricted by the lower support wall positioned on the body, and by side support walls configured on the support element which is positioned above the lower support wall and connected to the body, said side support walls interacting with side support surfaces of the cutting plate. The support plate has a lower support surface, interacting with the lower support wall of the seat, upper support surface interacting with the lower support surface of the cutting plate, and side surfaces positioned between them. Upper support surface of the support plate is configured in a conical shape with an axis lying perpendicularly to the lower support surface of the support plate and displaced from its centre of symmetry. When mounted in the seat, the axis of the indicated conical surface lies between a centre of symmetry of the cutting plate and an apex of the angle produced by the side support walls of the support element (patent RU 2380197, 2010).

The closest prior art is the technical solution disclosed in utility model patent RU 87377, 2009 that teaches a cutting tool comprising a body wherein a cutting member is mounted in an inclined position, said cutting member is carried out in form of a plate with parallel base surfaces and side surfaces, comprising blades that form cutting edge points.

### SUMMARY OF THE INVENTION

The purpose of the proposed invention is to increase durability of a cutting tool during cutting hard-to-machine materials and to improve the quality of machining.

The above purpose is to be achieved by the proposed cutting machining method that comprises preparatory adjustment of the position of a cutting member in a tool body with respect to a workpiece, movement of the tool with respect to a workpiece in the direction of primary motion, and longitudinal feed of the tool, whereby the preparatory adjustment of the cutting member is realized by arrangement of the cutting member first at right angle to a work surface being rotated about its cutting edge point by an angle $\eta$ = 30 - 60° with respect to a feed plane in the plane of primary motion, and then rotating by an angle $\tau$ = 5 - 60° in the feed plane to the side opposite to the feed direction, with subsequently rotating by an angle $\rho$ = 1-30° anticlockwise about its longitudinal axis towards a decrease in the back clearance angle of a blade, an edge angle of the blade is set within the range of $\beta 0$ = 60 - 90°. The cutting member can be configured in the form of a cutting plate or a cutting rod.

The proposed method differs from the known art in that it is characterized by the following features:

- a cutting member is mounted at right angle to a work surface and rotated about its cutting edge point by an angle $\eta$ = 30 - 60° with respect to the feed plane in the plane of primary motion;
- the cutting member is rotated in the feed plane by an angle $\tau$ = 5 - 60° to the side opposite to the feed direction;
- the cutting member is rotated by an angle $\rho$ = 1 - 30° anticlockwise about its longitudinal axis towards a decrease of the back clearance angle of a blade;
- an edge angle of the cutting member is set within an angular range of $\beta 0$ = 60 - 90°.

The technical result is also achieved by a cutting tool comprising a body in which the cutting member is mounted in an inclined position and comprises at least one blade and cutting edge point, wherein the cutting member is mounted being rotated about its cutting edge point by an angle $\eta$ = 30 - 60° with respect to the feed plane in the plane of primary motion, rotated by an angle $\tau$ = 5 - 60° in the feed plane to the side opposite to the feed direction, and rotated by an angle $\rho$ = 1 - 30° anticlockwise about its longitudinal axis towards a decrease in the back clearance angle of a blade, wherein an edge angle of the cutting member is set within an angular range of $\beta 0$ = 60 - 90°. The cutting member can be configured in the form of a cutting plate or a cutting rod. The cutting tool can be configured in the form of a milling cutter with cutting members.

The proposed technical solution differs from the known art in that it is characterized by the following features:

- a cutting member is mounted being rotated about its cutting edge point by an angle $\eta$ =30-60° with respect to the feed plane in the plane of primary motion;
- is rotated by an angle $\tau$ = 5 - 60° in the feed plane to the side opposite to the feed direction;
- and rotated by an angle $\rho$ = 1 - 30° anticlockwise about a longitudinal axis towards a decrease of the back clearance angle of the blade;
- an edge angle of the cutting member is set within the range of $\beta 0$ = 60 - 90°.

Both technical solutions are combined in one application due to the fact that both solutions exhibit a common inventive idea, which is confirmed by testing the proposed method and tool.

The proposed method and a tool for use thereof provide a force diagram where the direction of the resultant cutting force R (FIG. 3) is within maximal proximity to the direction of the longitudinal axis of the cutting member, thus providing maximum hardness and vibration-resistance of the tool, which results in improved tool durability during cutting hard-to-machine materials and in improved quality of machining.

PREFERRED EMBODIMENTS OF THE INVENTION

The proposed device and method are described below with references to the attached drawings.

FIG. 1 shows a scheme of mounting a cutting plate during cutting machining;
FIG. 2 - initial geometric parameters of the cutting plate;
FIG. 3 - scheme of mounting the cutting plate (left-side view A on FIG. 1);
FIG. 4 - scheme of mounting the cutting plate (top view on FIG. 1);
FIG. 5 - scheme of mounting the cutting plate (view B on FIG. 1);
FIG. 6 - geometric parameters the cutting plate in sectional view A-A (FIG. 4);
FIG. 7 - motion scheme of a cutting tool in various kinds of machining;
FIG. 8 - geometric parameters of the cutting plate at mounting with an angle of inclination $\eta$ = 30°;
FIG. 9 - geometric parameters of the cutting plate at mounting with an angle of inclination $\eta$ = 60°;
FIG. 10 - geometric parameters of the cutting plate at mounting with an angle of rotation p= 5°;
FIG. 11 - same at mounting of the cutting plate with an angle of rotation $\rho$ =30°;
FIG. 12 - geometric parameters at mounting the cutting plate with an angle of rotation $\rho$=5°;
FIG. 13 - geometric parameters of the cutting plate at mounting with an angle of rotation $\tau$=30°;
FIG. 14 - dependence of the degree of chip deformation on the inclination angle $\eta$ of the cutting plate in the process of turning high-resistance hardened steel EI643;
FIG. 15 - dependence of cutting forces on the inclination angle $\eta$ of the cutting plate in the process of turning high-resistance hardened steel EI643;
FIG. 16 - dependence of blade durability on the inclination angle $\eta$ of the cutting plate in the process of turning high-resistance hardened steel EI643;
FIG. 17 - four-blade plate for skew angular cutting;
FIG. 18 - mounting the plate for skew angular cutting in a tool head of the cutter;

FIG. 19 - same (left view);
FIG. 20 - cutting rod with one blade;
FIG. 21 - same with two blades;
FIG. 22 - cutter with a cutting rod;
FIG. 23 - side-facing cutter with a three-blade plate;
FIG. 24 - boring cutter with a three-blade plate (top view);
FIG. 25 - same (left view);
FIG. 26 - straight-turning cutter with a cutting rod;
FIG. 27 - thrust cutter with a cutting rod;
FIG. 28 - parting-off cutter with a cutting rod;
FIG. 29 - thread cutter with a cutting rod;
FIG. 30 - boring cutter with a cutting rod (top view);
FIG. 31 - same (left view);
FIG. 32 - face-milling cutter with blades for skew angular cutting;
FIG. 33 - face-milling cutter with cutting rods;
FIG. 34 - the dependence of durability on tool wear in the process of turning hardened steel with 30HGSA cutters: a - standard cutter, b, c - cutter for skew angular cutting;
FIG. 35 - dependence of the resultant force on the cutting speed in the process of face milling of EI643 steel: 1- with a standard milling cutter, 2 - with a skew angular milling cutter;
FIG. 36 - dependence of tool wear resistance on durability of the teeth of face milling cutters: 1 - of a standard face milling cutter, 2 - of a skew angular milling cutter.

Cutting machining method comprises initial adjustment of the position of a cutting member, e.g., of a cutting plate, with respect to a workpiece, movement of a tool with respect to a workpiece in the plane of primary motion and in the feed plane. Consider a scheme of mounting the cutting plate (FIG. 1) where a cutting tool comprises the cutting member in the form of cutting plate 1 movably mounted in body 6 with respect to workpiece 7 in plane of primary motion 8 in the direction of cutting speed vector V lying tangentially to the trajectory of the movement of cutting edge point 5 of cutting plate 1, and in feed plane 9 that is perpendicular to plane 8 in the direction of feed vector Sx. The cutting plate (FIGS. 1, 2) is provided with a blade 2 with primary 3 and with auxiliary 4 cutting edges and cutting edge point 5. Longitudinal plane 10 is symmetrical with respect to base surfaces of the cutting plate and passes through cutting edge point 5 of the blade 2 and through a longitudinal axis 11.

Initial parameters of the cutting plate blade are specified depending on the properties of the work material within the following angular range: edge angle at $\beta 0$ =60 - 90°, back clearance angle at $\alpha 0$ = 30 - 45°. Smaller values are specified in the process of machining aluminium alloys, titanium alloys, construction steels, grey cast irons. Larger values - in the process of machining high-resistance hardened steel, heat-resistant alloys and high-resistance cast irons.

The method is executed in the following way. Cutting plate 1 is mounted at right angle to the work surface of workpiece 7 (FIG. 1). Wherein the longitudinal axis 11 of the plate is aligned with an intersection line of the planes of primary motion 8 and the feed plane 9, and the cutting edge point 5 is positioned in the feed plane 9.

The cutting plate 1 is rotated about the cutting edge point by an angle $\eta$ = 30 - 60° (FIG. 3) in the plane of primary motion 8 relative to the feed plane 9, is rotated at an angle $\tau$ = 5- 60° (FIG. 4) in the feed plane 9 to the side opposite the feed direction Sx, is rotated by an angle $\rho$ = 1- 30° (FIG. 5) about its longitudinal axis counterclockwise towards a decrease of the primary cutting angle.

In this combination of the parameters of the cutting plate and its mounting relative to a workpiece, the operating parameters of the cutting part of the tool are selected as follows: inclination angle of the lead cutting edge at $\lambda$ = 30 - 45° (FIG. 3), main back clearance angle at $\alpha$ = 10-15° (FIG. 6), auxiliary angle in projection $\varphi 1$ = 5-20° (FIG. 4) which corresponds to the optimal geometric conditions in the process of employing the principle of skew angular cutting.

Machining method of cutting can be employed in various kinds of machining, whereby the trajectory of the relative motion of the cutting edge point of the cutting member and the feed direction will be changed along with the cutting speed V (FIG. 7): in the process of turning, plaining, face-milling - Sx; traverse turning, boring, rimming - Sy.

In order to optimize the inclination angle of the tool blade when employing the principle of skew angular cutting, experimental tests have been conducted with subsequent evaluations according to the most important criteria characterizing the cutting process: degree of deformation (shrinkage) of the chips, cutting force and tool resistance.

The results of experimentally testing the degree of chip deformation (FIG. 14), cutting forces (FIG. 15) and blade durability (FIG. 16) depending on inclination angle $\eta$ of the cutting plate during turning high-resistance hardened steel 51HRC have shown that the optimal inclination angle is that of $\eta$ = 45°. Same results have been obtained in the process of mechanic machining of various kinds of ferrous and non-ferrous metals. The provided graphs show that the range at which the inclination angle of the plate has been selected lies within $\eta$ = 30 - 60°. The graphs in figures 14, 15 show that at the optimal inclination angle of the tool blade ($\eta$ = 45°), the degree of chip deformation and the cutting force are 20-30% smaller than during horizontal mounting $\eta$ = 0°, and that durability increases by 3.5 times (FIG. 16).

The change of inclination angle $\eta$ influences the value of the main back clearance angle $\alpha$, primary face angle $\gamma$, inclination angle of lead cutting edge $\lambda$ and connected therewith main indicators of the cutting process: force parameters and durability. Figures 8, 9 show geometric parameters of cutting plates mounted with maximally allowable inclination angles $\eta$. At angles $\eta 1 \leq 30°$, the negative value of angle $-\gamma$ increases and the angle of inclination of the blade $\lambda$ significantly decreases, which leads to a substantial increase of the degree of chip deformation and cutting force - the principle of skew angular cutting turns into the process of standard (straight-turning) cutting. At $\eta 2 \geq 60°$, the main back clearance angle is absent $\alpha$ = 0°. This leads to high friction, loss of durability and of wear resistance of the tool.

Main back clearance angle $\alpha$ and face angle $\gamma$ (FIGS. 10, 11) depend on plate rotation about the longitudinal axis by angle $\rho$. At values $\rho \leq 1$ °, angle $\alpha$ significantly increases and angle $\gamma$ decreases, which results in compromised bending resistance of the blade of the plate, and, consequently, in chipping of the cutting edge. At installation of the cutting plate at an angle $\rho \geq 30°$, the main back clearance angle takes the value of $\alpha \leq 0°$, which is accompanied by high friction and wear of the blade resulting in the loss of cutting characteristics of the tool.

The rotation of the cutting plate in the feed plane by angle $\tau$ influences the value of the angles in horizontal plane $\varphi$ and $\varphi 1$ (FIGS. 12, 13). At an angle $\tau \geq 60°$ the auxiliary angle in the horizontal plane may take the value of $\varphi 1$ = 0°, and at an angle $\tau \leq 5°$ the plate for the finishing work will have a primary angle in the projection $\varphi$=0°, and the principle of skew angular cutting turns into a process of standard (straight-turning) cutting.

Comparative tests were also conducted during machining of cast aluminium alloy.

The purpose of the tests was to identify durability characteristics, load-bearing characteristics and quality indicators that are provided during turning of cast aluminium alloy by cutters for skew angular cutting in comparison with standard cutters.

The following initial technological conditions were used during the tests:

- machining method - exterior turning of a cylindrical surface;
- work material - heat-treated casting alloy AlSi10Mg;
- diameter and length of workpieces Ø130×280mm;
- cutting mode: cutting speed V = 200...500 m/min, depth of cut - t = 1 mm, feed S = 0,1 mm/rev
- machining without cooling;
- left-hand cutter with a tool head with a cross-section of 20×20 $mm^2$;
- "Krupp Widia" cutting plates SPG No. 120308.

For conducting the tests, standard cutters R110.4-I126 (according to the State Standard Specification GOST 26611-85) were designed and manufactured; custom cutter for skew angular cutting R110.4 - I120,...I121,...I122,...I123,...I124,...I125.

The machined workpieces Ø150×320mm were specifically cast from aluminium alloy with silicon content 11,7...13,6%. The control results of Auger spectrometer show an average content of silicon in the castings to be 12,7%.

Screw-cutting machines were used as equipment for the tests. Testing durability and force characteristics was done using IK62 screw-cutting machine equipped with force-measuring devices comprising a special device SUR300 for measuring vertical and radial components of the cutting force, as well as two automatic data recording instruments N307/1.

The analysis of roughness of as-turned finish of the machined surface was conducted using SV18R (Czechoslovakia) screw-cutting machine. Measurement of the microroughness height has been conducted with profilograph-roughness indicator.

Taking into account that the end-result of the tests is evaluation of cutting qualities of the cutters for skew angular cutting in comparison with standard cutters, the following technological test conditions were selected:

- when testing durability - V = 300-350 m/min, t = 0,5...1 mm and S = 0,07 mm/rev;
- when testing force - V = 200-300 m/min, t = 2mm, S = 0,07; 0,14 and 0,28 mm/rev;
- when testing roughness of as-turned finish of the machined surface - V = 200-300 m/Mmin; t = 0,5 mm, S = 0,04; 0,07; 0,15; 0,3 mm/rev and S = 0,05; 0,078; 0,122; 0,2 mm/rev.

Cutting plates of the cutters for skew angular cutting are configured with variable parameters: cutting point wedge angle $\beta 0$ = 66 and 76°, curvature radius of cutting edge points r = 0,5; 0,8 and 1,2 mm. In the process of machining, no metal-working cooling lubricant has been applied.

The evaluation of cutting process dynamics has been conducted according to the force parameters and according to the intensity of cutter self-oscillation. Oscillograph charts data that was registered during the tests has been deciphered and summarized in the protocol (Table 1).

Table 1 illustrates that the smallest values of cutting forces correspond to a custom cutter with a cutting point edge angle of plate blades P = 66°. The cutter for skew angular cutting with an angle β = 76° provides a relative decrease of the power load

$\Delta P = \frac{P_{cm} - P_{cn}}{P_{cm}} \times 100\%$ within the range of $\Delta P$ = 10,2 - 24,5%, and a custom cutter (β = 66°) in comparison with a custom cutter (β = 76°) provides a decrease of force P within the range of $\Delta P$ = 7,6 - 8,3%.

Measurements of self-oscillation parameters indicate that in the process of turning with custom cutters, the amplitudes of oscillations in directions $P_z$ and $P_y$ are smaller compared with turning with standard cutters. Their ratios are $\Delta A_Z = \frac{A_{Z_{cm}}}{A_{Z_{cn}}} = 1{,}1 \div 1{,}6$; $\Delta A_y = 1{,}2 \div 1{,}7$.

Due to a limited amount of samples, only one custom cutter with an angle β = 76° and a standard cutter were tested for a degree of wearing. The results are shown in Table 2.

The collected data shows advantages of the cutter for skew angular cutting in comparison with a standard cutter - the degree of wear of the custom cutter during the tests measures 320 and 215 minutes, which is smaller than standard cutter wear by 1,56 and 1,78 times accordingly.

The logs (Tables 3, 4) reflect the parameters of the roughness of as-turned finish of the machined surface for cutters of standard and of custom configuration. These parameters were produced during various values of feed and radius of curvature of the cutting edge points of the cutting plates. Arithmetic mean of microroughness height was measured in three sections of a machined workpiece, said sections being located equidistant along the circumference. The mean average $Ra_{av}$ has been calculated according to three values Ra.

Tables show that in the process of turning with a standard cutter, the height of microroughness measures minimally $Ra_{av}$ = 2,2 μm at S = 0,07-0,08 mm/rev. All custom cutters produce a smaller height when compared to standard cutters, i.e. in the process of turning with cutters for skew angular cutting, higher quality of machining is achieved. Dependencies in the tests also attest to the fact that microroughness height that is minimally possible for a standard cutter can be provided by custom cutters at higher feed speed, in this case exceeding the feed of a standard cutter by 1,5 - 3 times, i.e. with a higher yield capacity of machining. The best results are provided by a cutter with an angle P = 76° and r = 0,8 mm. When in use, it allows to conduct machining without decreasing the quality of work surface and with the output volume 3 times higher than that of a standard cutter.

In experimental analysis during turning, samples cast from aluminium alloy with a silicon content of ~12,7% have been used. The tests have established that the cutters for skew angle cutting outperform standard cutters in all parameters:

- cutting forces decrease by 10-25%;
- the intensity of self-oscillations decreases along the vertical axis by 1,1 - 1, 6 times, along the radial axis by 1,2 - 1,7 times;
- wear resistance along the back surface decreases by 1, 6 - 1,8 times;
- height of microroughness is lowered by 1,2 - 2,7 times;

The improved parameters of the cutting process provided by the proposed method allow to increase the efficiency of machining by tripling the feed without compromising the quality of the work surface of hard-to-machine alloys.

Cutting tool (FIG. 1) comprises a cutting member configured in form of a cutting plate 1 with a blade 2, movably mounted in a body 6 with respect to a workpiece 7 in a plane of primary motion 8 and in a feed plane 9.

The blade 2 has a lead cutting edge 3 and an auxiliary 4 cutting edge and a cutting edge point 5.

The plane 8 passes tangentially to the trajectory of the movement of the cutting edge point 5 towards the direction of a speed cutting vector V. The feed plane 9 is positioned perpendicularly to the cutting speed vector V and coincides with the direction of a feed vector Sx.

A longitudinal plane 10 (FIG. 2) of the cutting plate, being symmetrical to the relative base surfaces of the plate, passes through the cutting edge point 5 of the blade 2 and through a longitudinal axis 11.

Initial parameters of the blade of the cutting plate are set depending on the qualities of the machined material within the following range: cutting point wedge angle β0 = 60 - 90°, back clearance angle α0 = 30 - 45°. Lower values are selected during machining of aluminium alloys, titanium alloys, construction steels, gray irons; higher values - during machining high-resistance hardened steel, heat-resisting alloys and high-resistance irons.

The cutting member can be configured in the form of a multiblade cutting plate 12 (FIG. 17). Blades 2 of the cutting plate are formed by the intersection of lateral faces of two truncated pyramids 13 and 14 that are turned about common central axis 15 in opposite directions. Below are examples of embodiments of various cutting tools.

In a cutting tool configured as a straight-turning cutter (FIGS. 18, 19), the cutting blade 12 is mounted in a profiled seat 16 of the body 6 at an inclined angle η towards the feed plane 9 and is secured by a screw 17. The profiled seat is in the form of a truncated pyramid mirroring the profile of the plate. Cutting plates can be configured with three, four, five and six blades.

The cutting tool configured as a thrust cutter (FIG. 23) comprises a three-blade cutting plate 22, mounted in a tool head 23 at angle η towards a mounting plane 24. The cutting plate is secured by the screw 17. The inclination of the lead cutting edge of the cutting plate at angle λ provides conditions for skew angular cutting. The primary angle in the projection φ = 90° creates the conditions for face-turning.

In a cutting tool configured as a boring cutter (FIGS. 24, 25), a three-blade cutting plate 22 is mounted in a tool head 25, comprising an attaching section 26 for securing in a cutter-holder and working section 27 carrying the cutting plate. The cutting plate is secured by screw 17. Angle η of the mounting of the cutting plate in the profiled seat of a tool head and the inclination of the lead cutting edge at angle λ provide the conditions for skew angular cutting in the process of boring a workpiece rotating with speed V.

Cutting tool can be configured in the form of a cutting rod 18 (FIG. 20) of a cylindrical shape with the blade 2 at the end and a locating flat 19 arranged in parallel with respect to the longitudinal axis 11 of the rod. The cutting rod 18 can comprise two blades 2, configured at the opposite ends (FIG. 21), and two diametrically opposite flats 19.

In a cutting tool (FIG. 22), the cutting rod 18 is mounted in a round aperture 20 of the body 6 with an inclination at angle η towards the feed plane 9 and is secured by a screw 21 in communication with the flat 19.

In a cutting tool configured as a straight-turning cutter (FIG. 26), a cutting rod 28 is mounted in a tool head 29 at an angle inclination η and secured by a screw 21. Primary angle in projection φ can be changed within the range of 5...75°. Lead cutting edge, being inclined at angle λ, functions according to the principle of skew angular cutting.

In a cutting tool configured as a thrust cutter (FIG. 27), a cutting rod 30 is mounted in a tool head 31 that is bent back and is secured by the screw 21. Primary angle in the projection φ = 90° corresponds to the operating conditions of the thrust cutter. Its values can change within the range of 45...90°.

In a cutting tool configured as a parting-off cutter (FIG. 28), a cutting rod 32 is configured with an extended cutting part, is mounted in a tool head 33 at angle η towards a mounting plane 34 of the tool head. Lead cutting edges positioned symmetrically with respect to an axis, have an angle in projection φ and are inclined at angle λ that creates the conditions for skew angular cutting.

In a cutting tool configured as a thread cutter (FIG. 29), a cutting rod 34 configured with a cutting point wedge angle in the projection 60°, is mounted in a tool head 35 at angle η towards a mounting plane 36 of the tool head. The rod is secured by the screw 21. Lead cutting edges, positioned symmetrically with respect to an axis, are inclined at angle λ that creates the conditions for skew angle cutting.

In a cutting tool configured as a boring cutter (FIGS. 30, 31), a cutting rod 37 is mounted in a tool head 38 consisting of an attaching section 39 for securing in the cutter-holder, and a working section 40 supporting a cutting rod. The rod is secured by the screw 21. Angle η of mounting the cutting rod in the aperture of the tool head and the inclination of the lead cutting edge at angle λ provide the conditions for skew angular cutting.

A cutting tool configured as a face-milling cutter (FIG. 32) comprises a cylindrical body 41 with a central aperture for mounting on the machine. Cutting plates 12 are mounted in the profiled seats of the body 41 and are secured by the screws 17. Longitudinal axes 11 of the plates are inclined at angle η towards the feed plane 9 that passes through the cutting edge point 5 of the cutting plate and through an axis 42 of the body 41.

A cutting tool configured as a face-milling cutter (FIG. 33) comprises a cylindrical body 43 with a shank for mounting on the machine. Cutting rods 44 are mounted in round apertures of body 43. Longitudinal axes 45 of the cutting rods are inclined at angle η towards the feed plane 9 that passes through a cutting edge point 46 of the plate and an axis 47 of a body 43.

The proposed cutting tool was tested to identify durability, force parameters and quality characteristics which are provided by cutters and milling cutters for skew angular cutting in comparison with tools of standard design.

Example # 1

Proposed cutting tool - cutter AT002.000 and cutter AT004.000 (FIGS. 18, 19) were tested for durability in comparison with a standard cutter (GOST 26611-85) during the process of turning a workpiece measuring 30mm in diameter and 500mm in length and cast from hardened steel HRC 46.

The geometric parameters of all cutters are the same: primary angle in the horizontal plane φ = 45°, auxiliary angle in the plane φ1 = 15°, main back clearance angle α = 12°, primary face angle γ = 0°. The plates KR are mounted in tool heads at an angle η = 45° with respect to the feed plane. The plates are made of hard alloy T15K6.

Cutting test mode: depth of cut t = 0,2mm, feed S = 0,11mm/rev, cutting speed V = 40m/min. All tests have been conducted without applying metal-working cooling lubricant.

FIG. 34 shows the dependency of durability on the degree of wear of hard-alloy plates along the back surface.

The graphs show that at equal degrees of wear, cutters of the proposed design retain greater durability. At equal degree of wear, e.g. at h=0,6mm, a standard cutter "a" has durability of T=10min, cutters for skew-angular cutting, respectively: "b" (AT002.000) - T=34 min, "c" (AT004.000) - T=38 min, i.e. durability of the proposed cutters exceeds durability of standard cutters made of the same hard alloy by no less than 3 times.

Example # 2

Durability of the proposed cutting tool - cutter AT014.000 (FIGS. 22, 26) - was tested together with an analogous standard cutter in the process of turning hardened steel HRC 46. Tests have been conducted using a screw-cutting machine 1A616.
Test cutting mode: depth of cut - t=1mm, feed S=0,26mm/rev, cutting speed V=89m/min. Machining has been conducted without applying metal-working cooling lubricant.
Data received from comparative testing of durability in the process of turning hardened steel HRC 46 has been recorded in Table 5: it shows that durability of a cutter for skew angular cutting exceeds the durability of a standard cutter by 2,5...3,5 times with the same degrees of wear and at equal technological conditions of cutting (the geometry of a cutting part, the material being processed, the cutting mode, equipment).

Example # 3

Durability and force impact of the proposed cutting tool - milling cutter AT014.000 (FIG. 32) - were tested together with an analogous standard milling cutter (GOST 26595-85) in the process of face milling steel HRC 51.
Test cutting mode using a general purpose milling machine 6M82 is the following: depth of cut - t = 1mm, feed S = 0,1 mm/tooth, cutting speed V = 30 - 70m/min. Measurement of cutting forces has been conducted with a special dynamometer, a general purpose strain gorge station UTS-12 and a loop oscillograph N-105.
FIG. 35 shows the tests results. Force load on the teeth of the proposed face-milling cutter that operates according to the skew angular cutting principle is 2...3 times lower compared to a standard face-milling cutter.
Durability tests in the process of milling steel HRC51 have shown advantages of the face-milling cutter for skew angular cutting (cutting mode: depth of cut - t=1mm, feed S=0,1mm/tooth, cutting speed v=78,5m/min). Graphs show (FIG. 36) that durability of KR milling cutter (curve 2) exceeds that of a standard milling cutter (curve 1) by 2-2,5 times.

Example # 4

The proposed cutting tool AT018.000 milling cutter for skew angular cutting (FIG. 33) has been tested for durability. The following technological conditions have been used during the tests: operating diameter of the milling cutter - D = 32mm; amount of cutting rods - 3; material - hard alloy N10. Geometric parameters of the blades: primary angle in the plane $\varphi$ = 45°, auxiliary angle in the plane $\varphi$1 = 5°, primary face angle $\gamma$ = -15°, back clearance angle $\alpha$ = 20°.
Workpiece is a bar measuring 40x40mm, in length L = 100mm, cast from steel 45 hardened to 40...45HRC. Machine - milling machine model 675. Cutting mode: rotating frequency n = 640 rev/min; cutting speed V = 64 m/min; depth of cut t = 1 mm, feed Sm = 64/min, Sz = 0, 033 mm/tooth; width of milling B = 10mm. No metal-working cooling lubricant has been applied in the process of machining.
240 minutes into the tests, no visible traces of wear have been detected. Chips were of light colour which indicates low temperatures in the cutting area. Durability of the milling cutter exceeded the normalized durability (T = 120 min) more than by two times.
Roughness of the as-turned condition of the finish surface corresponds to classification 8 of smoothness.

INDUSTRIAL APPLICABILITY

The proposed tool can be manufactured from known elements and materials and using known methods of their assembly.
Employment of the proposed method and of the tool allows to increase tool's durability as well as quality of machining in the process of cutting hard-to-machine materials, in particular of special steels, aluminium alloys, titanium alloys and other materials.

Table 1. Force tests protocol for cutters of standard and custom design (V = 300 m/min; t = 2 MM; machining without cooling lubricant)

| $P_z$, $P_y$, P in Newtons | | | | | | | | | | |
|---|---|---|---|---|---|---|---|---|---|---|
| r, mm | S, mm/rev | Type of cutter | | | | | | | | |
| | | Standard | | | Custom β = 66° | | | Custom B = 76° | | |
| | | $P_z$ | $P_y$ | P | $P_z$ | $P_y$ | P | $P_z$ | $P_y$ | P |
| 0,5 | 0,07 | 235 | 160 | 284 | | | | 210 | 145 | 255 |
| | 0,14 | 330 | 220 | 397 | | | | 310 | 165 | 351 |
| | 0,28 | 610 | 520 | 802 | | | | 520 | 310 | 605 |
| 0,8 | 0,07 | | | | 200 | 110 | 228 | 215 | 125 | 249 |
| | 0,14 | | | | 290 | 145 | 324 | 310 | 165 | 351 |
| 1,2 | 0,07 | | | | 200 | 110 | 228 | 215 | 125 | 249 |
| | 0,14 | | | | 280 | 145 | 315 | 300 | 165 | 342 |

Table 2. Protocol of testing standard and custom cutters

| (V = 350 m/min, S = 0,07 mm/rev, machining without cooling lubricant) | | |
|---|---|---|
| Type of the cutter | Degree of wear h (mm) in test conditions | |
| | t = 1 mm, T = 320 min | t = 0,5 mm, T = 215 min |
| Standard | 0,078 | 0,032 |
| Custom, β = 76° | 0,050 | 0,018 |

Table 3. Protocol of analysing the roughness of as-turned finish of the machined surface while turning with standard and custom cutters

| (V = 200 m/min, t = 1 mm, r = 0,5 mm) Ra in μm | | | | | | | | |
|---|---|---|---|---|---|---|---|---|
| S, mm/rev | Standard cutter | | | | Custom cutter (β = 76°) | | | |
| | $Ra_1$ | $Ra_2$ | $Ra_3$ | $Ra_{av}$ | $Ra_1$ | $Ra_2$ | $Ra_3$ | $Ra_{cp}$ |
| 0,04 | 2,5 | - | 3,1 | 2,8 | 1,6 | 1,4 | 1,25 | 1,42 |
| 0,07 | 2,1 | 1,8 | 2,6 | 2,2 | 2,1 | 1,5 | 1,6 | 1,73 |
| 0,15 | 3,0 | 3,1 | 2,5 | 2,86 | 2,8 | 2,6 | 2,6 | 2,7 |

Table 4. Protocol of analysing the roughness of as-turned finish of the machined surface while turning with standard and custom cutters

| (V = 200 m/min, t = 1 mm) Ra in μm | | | | | | | | | |
|---|---|---|---|---|---|---|---|---|---|
| r, mm | S, mm/rev | Custom cutter (β = 66°) | | | | Custom cutter (β = 76°) | | | |
| | | $Ra_1$ | $Ra_2$ | $Ra_3$ | $Ra_{av}$ | $Ra_1$ | $Ra_2$ | $Ra_3$ | $Ra_{av}$ |
| 0,8 | 0,05 | 1,1 | 1,9 | 1,3 | 1,4 | 1,7 | 1,8 | 2,3 | 1,93 |
| | 0,078 | 1,7 | 1,7 | 1,55 | 1,6 | 1,1 | 0,95 | - | 1,02 |
| | 0,122 | 2,1 | 2,1 | 2,6 | 2,2 | 0,9 | 2,0 | 1,0 | 1,3 |
| | 0,2 | 3,2 | - | 3,2 | 3,2 | 1,9 | 2,1 | 2,2 | 2,1 |
| | 0,294 | - | - | - | - | - | - | 3,2 | 3,2 |

(continued)

| (V = 200 m/min, t = 1 mm) Ra in μm | | | | | | | | | |
|---|---|---|---|---|---|---|---|---|---|
| r, mm | S, mm/rev | Custom cutter (β = 66°) | | | | Custom cutter (β = 76°) | | | |
| | | $Ra_1$ | $Ra_2$ | $Ra_3$ | $Ra_{av}$ | $Ra_1$ | $Ra_2$ | $Ra_3$ | $Ra_{av}$ |
| 1,2 | 0,05 | 2,3 | 2,5 | 1,9 | 2,23 | 0,95 | 0,95 | 1,0 | 0,97 |
| | 0,078 | 1,2 | 2,6 | 2,5 | 2,1 | 1,4 | 1,7 | 1,6 | 1,57 |
| | 0,122 | 1,9 | 1,9 | 1,9 | 1,9 | 1,5 | 1,5 | 1,7 | 1,6 |
| | 0,2 | 3,0 | 2,5 | 2,0 | 2,5 | 3,1 | 3,0 | 3,2 | 3,1 |
| | | | | | | | | | |
| | | | | | | | | | |
| | 0,294 | 3,0 | 3,0 | 3,0 | 3,0 | - | 3,1 | - | 3,1 |

Table 5. Protocol of testing durability of side-facing cutters in the process of turning HRC 46 steel.

| Operation time, min | | 5 | 10 | 15 | 20 | 25 | 30 | 35 | 40 | 45 | 50 | 55 | 60 |
|---|---|---|---|---|---|---|---|---|---|---|---|---|---|
| Wear h in mm of cutter | standard | 0,3 | 0,6 | 0,8 | 1,0 | | | | | | | | |
| | KR AT014.000 | 0,15 | 0,31 | 0,36 | 0,42 | 0,47 | 0,52 | 0,57 | 0,6 | 0,65 | 0,7 | 0,74 | 0,78 |

## Claims

1. Cutting machining method, comprising initial adjusting of the position of a cutting member in a tool body with respect to a workpiece, movement of the tool with respect to a workpiece in a direction of primary motion, and longitudinal feed of the tool, **characterized in that** the cutting member is preset at right angle to a work surface, rotated about its cutting edge point by an angle $\eta$ = 30 - 60° with respect to the speed vector of cutting in the plane of primary motion, then rotated by an angle $\tau$ = 5 - 60° in the feed plane to the side opposite to the feed direction, and subsequently rotated by an angle $\rho$ = 1 - 30° anticlockwise about its longitudinal axis towards a decrease in the main back clearance angle of a blade, wherein an edge angle of the blade is set within the range of $\beta 0$= 60-90°.

2. Machining method of cutting according to claim 1, **characterized in that** a cutting member can be configured in the form of a cutting plate or a cutting rod.

3. A cutting tool comprising a body in which a cutting member is mounted in an inclined position and comprises at least one blade and at least one cutting edge point, **characterized in that** the cutting member is mounted being rotated about its cutting edge point by an angle $\eta$ = 30 - 60° with respect to the feed plane in the plane of primary motion, wherein the cutting member is rotated by an angle $\tau$ = 5 - 60° in the feed plane to the side opposite to the feed direction, and rotated by an angle $\rho$ = 1 - 30° anticlockwise about a longitudinal axis towards a decrease in the main back clearance angle of the blade, wherein an edge angle of the blade is set within the range of $\beta 0$ = 60 - 90°.

4. A cutting tool according to claim 3, **characterized in that** the cutting member can be configured in the form of a cutting plate or a cutting rod.

5. A cutting tool according to claim 1, **characterized in that** it is configured in the form of a milling cutter with cutting members.

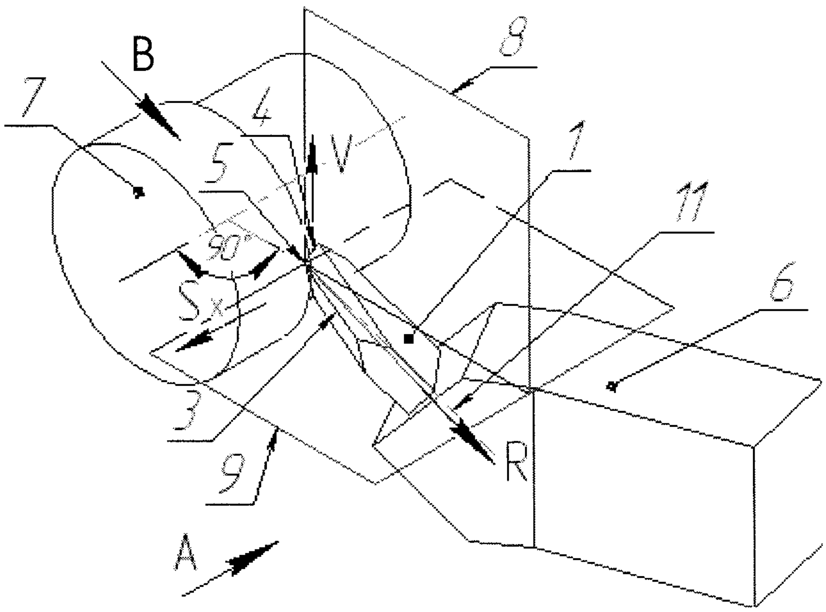


FIG. 1

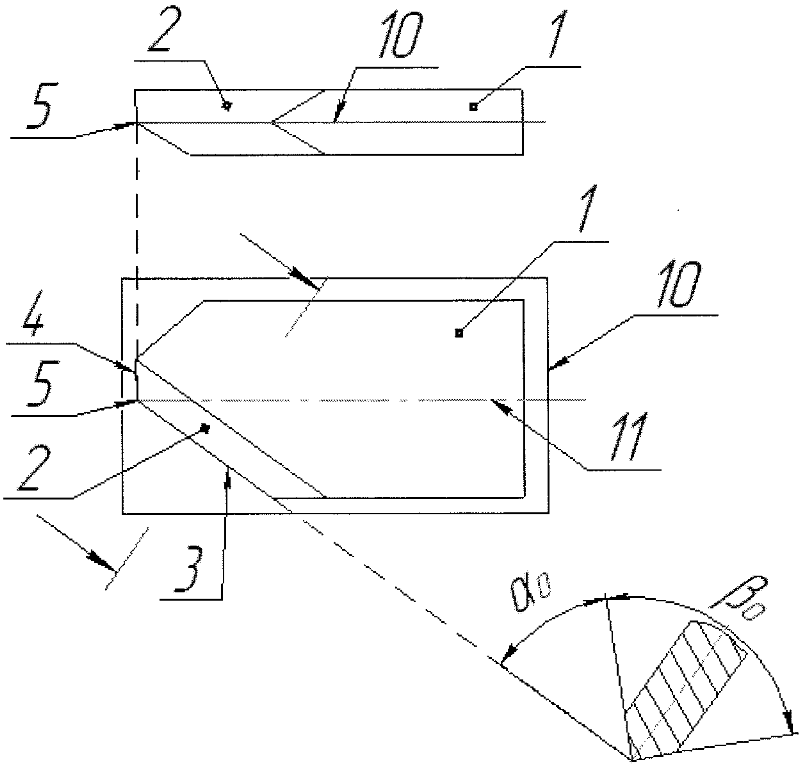


FIG. 2

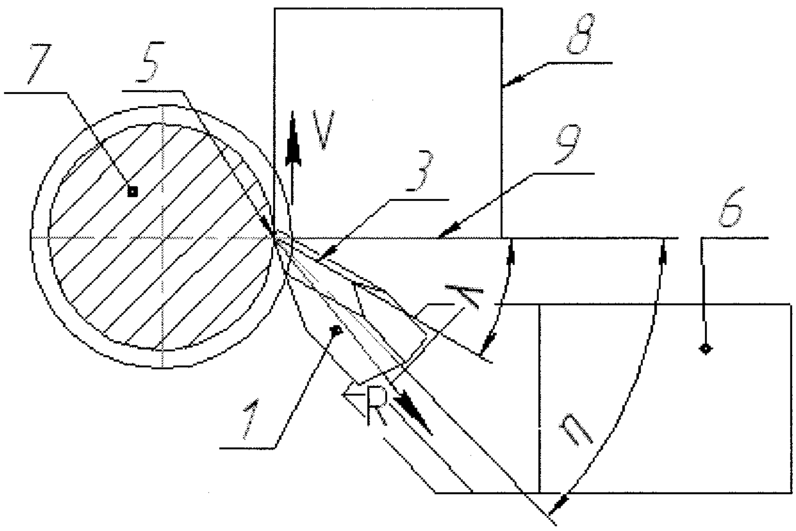


FIG. 3

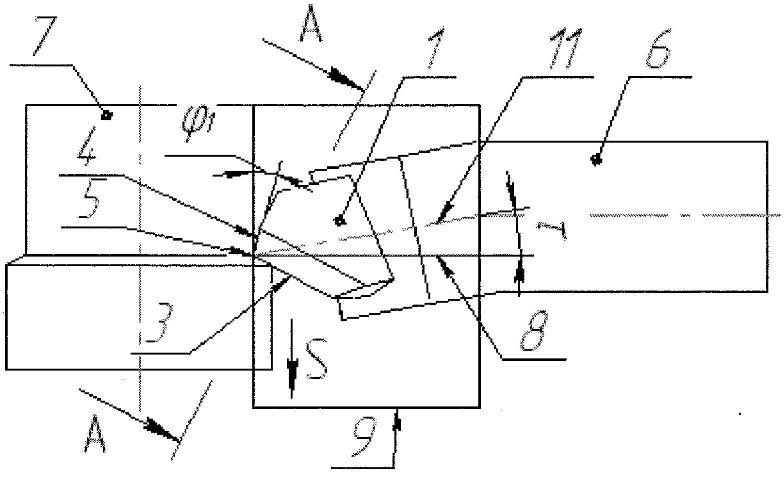


FIG. 4

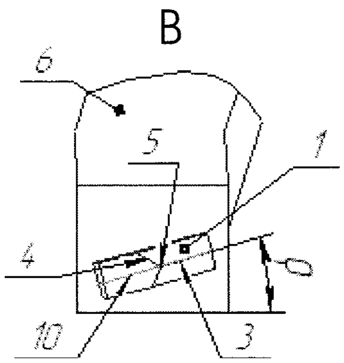


FIG. 5

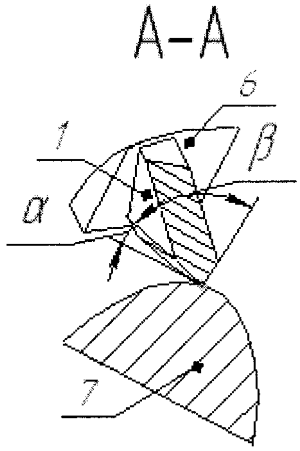


FIG. 6

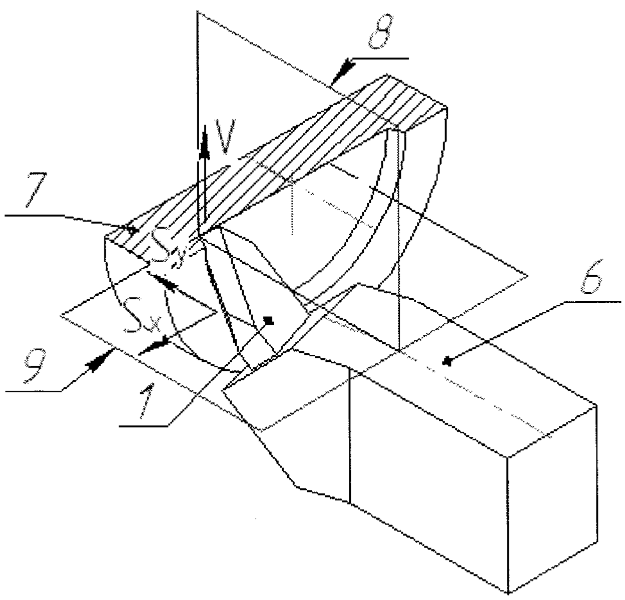


FIG. 7

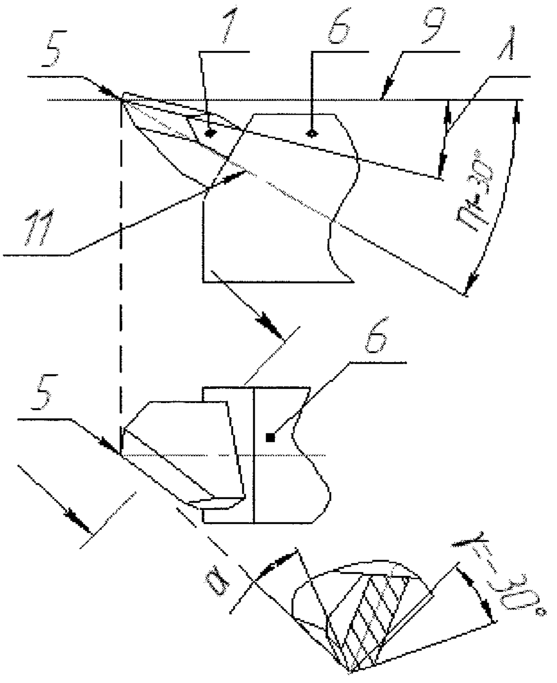


FIG. 8

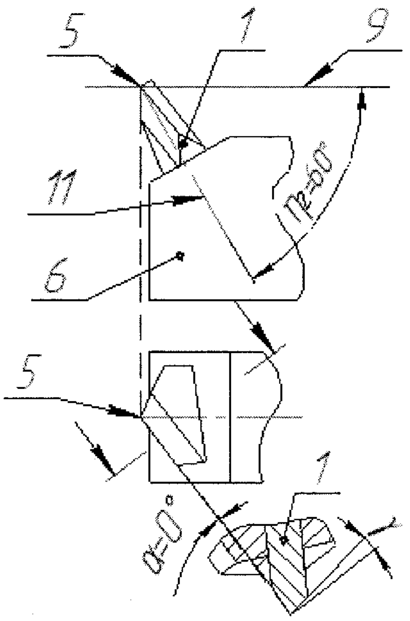


FIG. 9

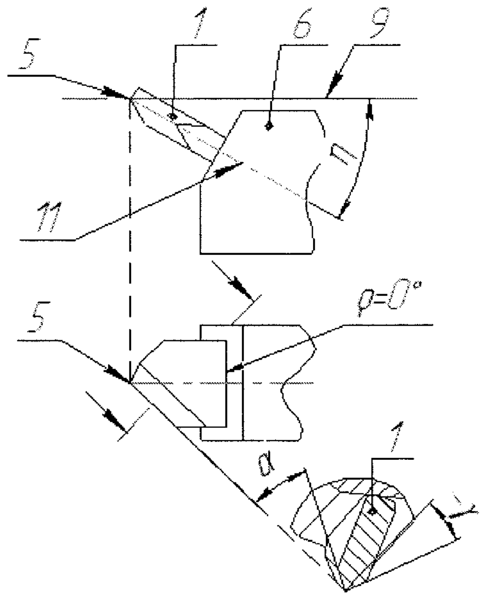


FIG. 10

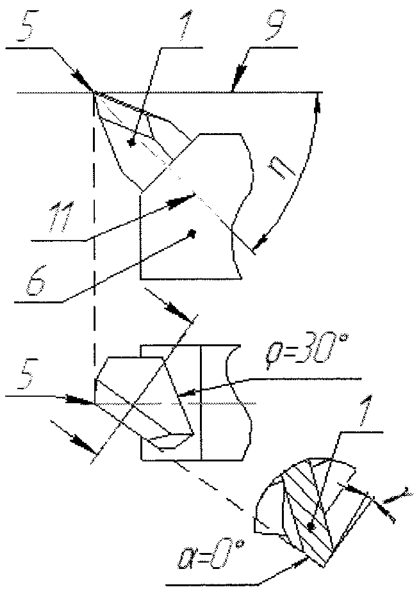


FIG. 11

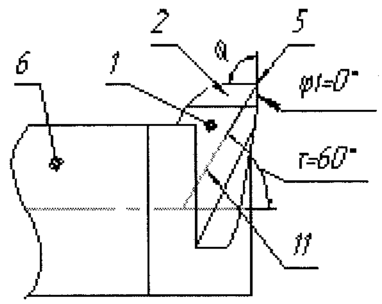


FIG. 12

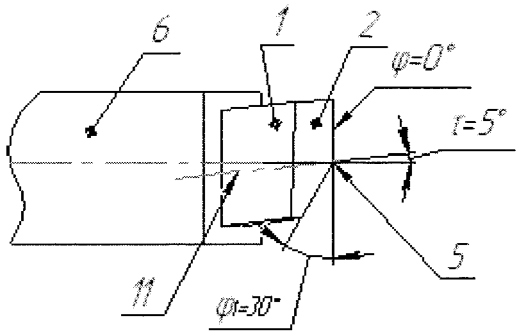
6
1
2
φ=0°
τ=5°
5
11
φ1=30°

FIG. 13

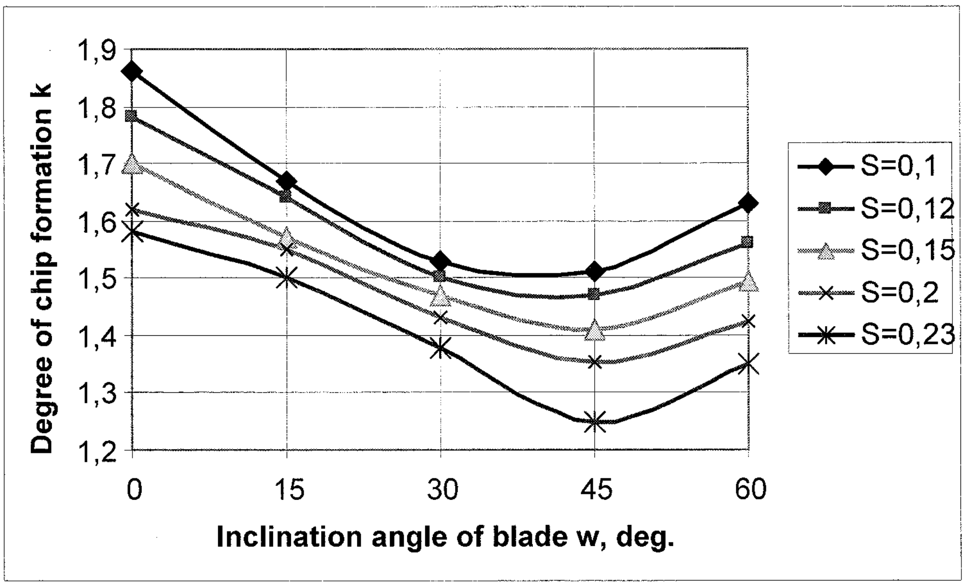
Degree of chip formation k
1,9
1,8
1,7
1,6
1,5
1,4
1,3
1,2
0
15
30
45
60
Inclination angle of blade w, deg.
S=0,1
S=0,12
S=0,15
S=0,2
S=0,23

FIG. 14

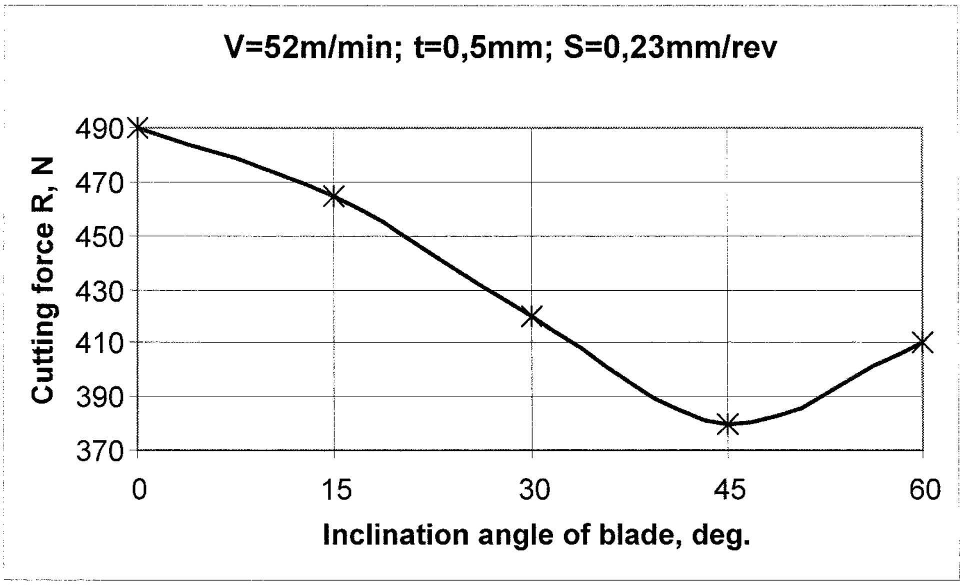
V=52m/min; t=0,5mm; S=0,23mm/rev
Cutting force R, N
490
470
450
430
410
390
370
0
15
30
45
60
Inclination angle of blade, deg.

FIG. 15

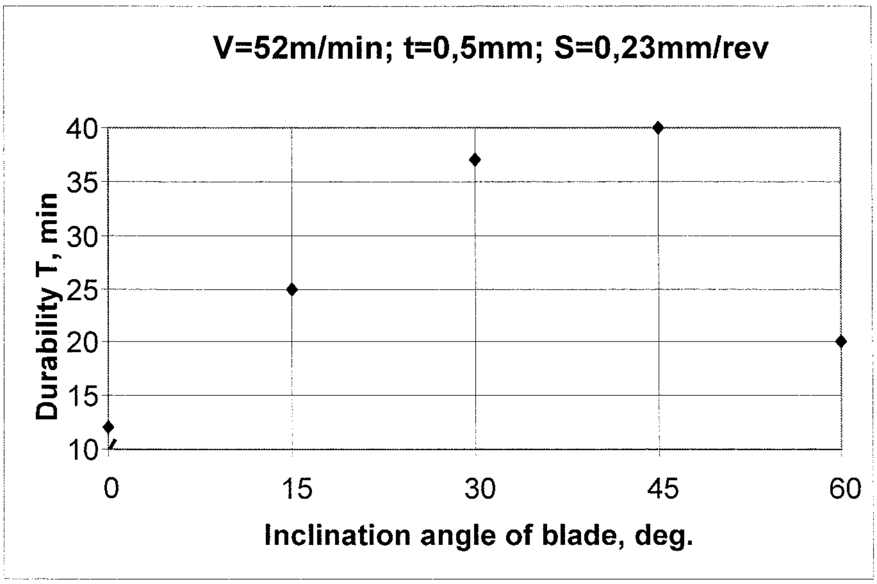
V=52m/min; t=0,5mm; S=0,23mm/rev
Durability T, min
40
35
30
25
20
15
10
0
15
30
45
60
Inclination angle of blade, deg.

FIG. 16

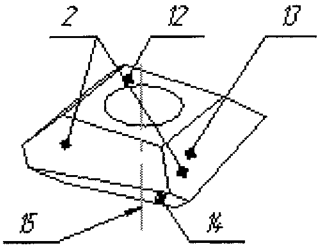


FIG. 17

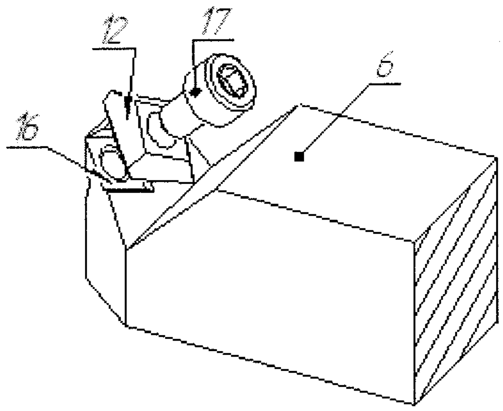


FIG. 18

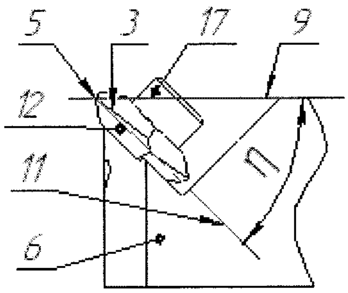


FIG. 19

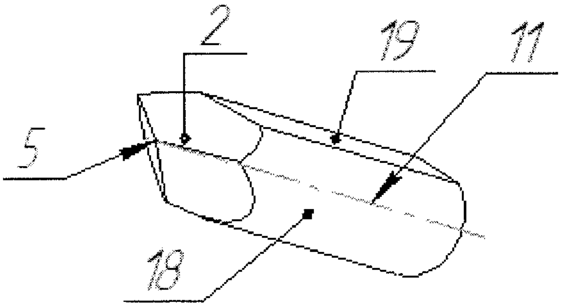


FIG. 20

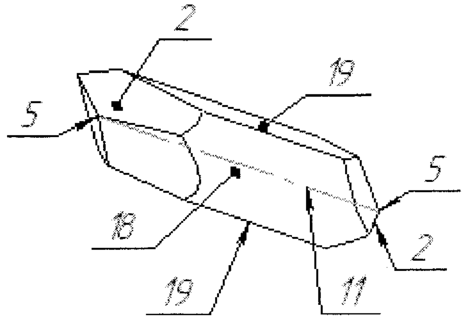


FIG. 21

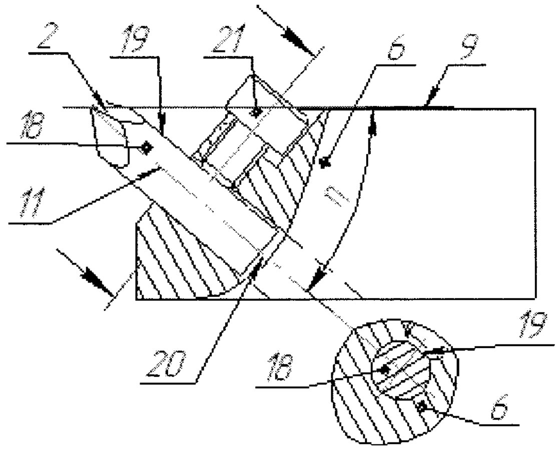


FIG. 22

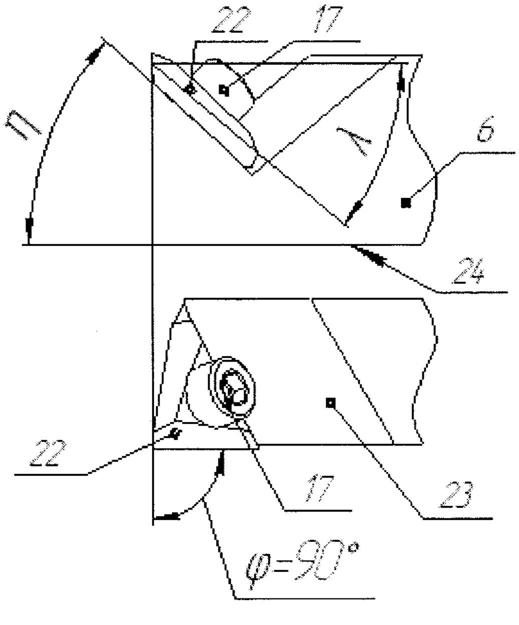


FIG. 23

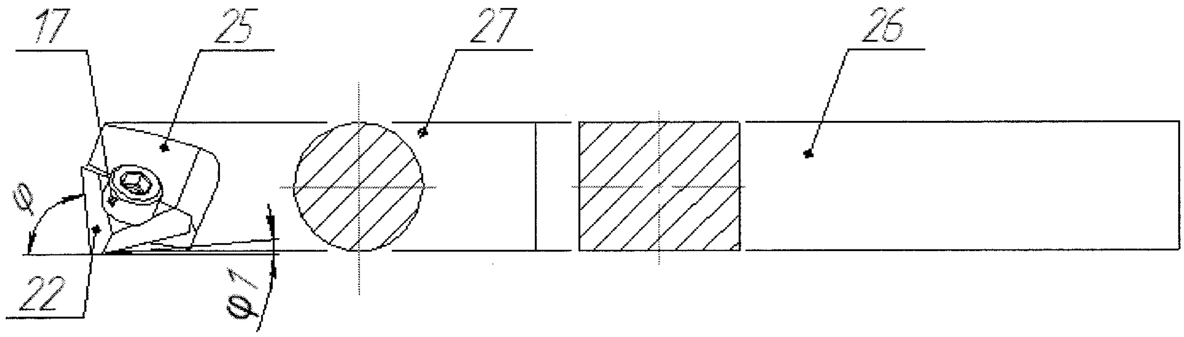


FIG. 24

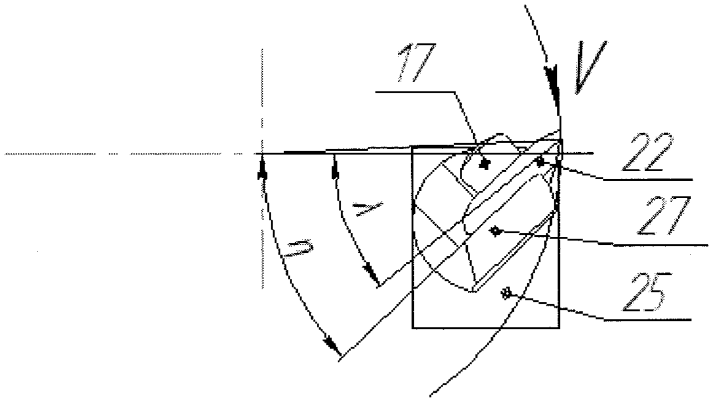


FIG. 25

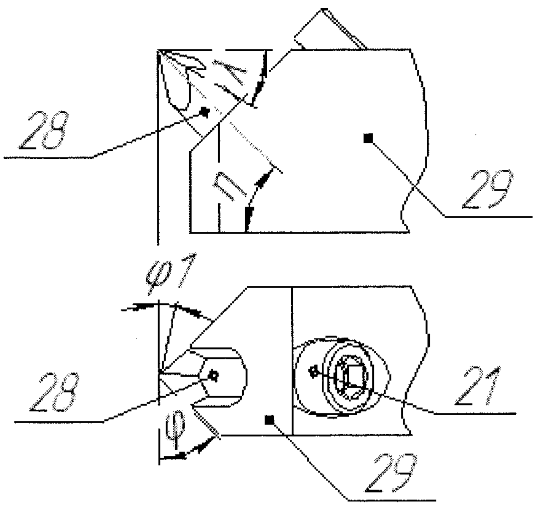


FIG. 26

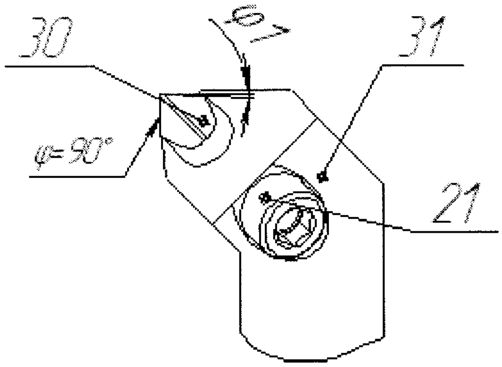


FIG. 27

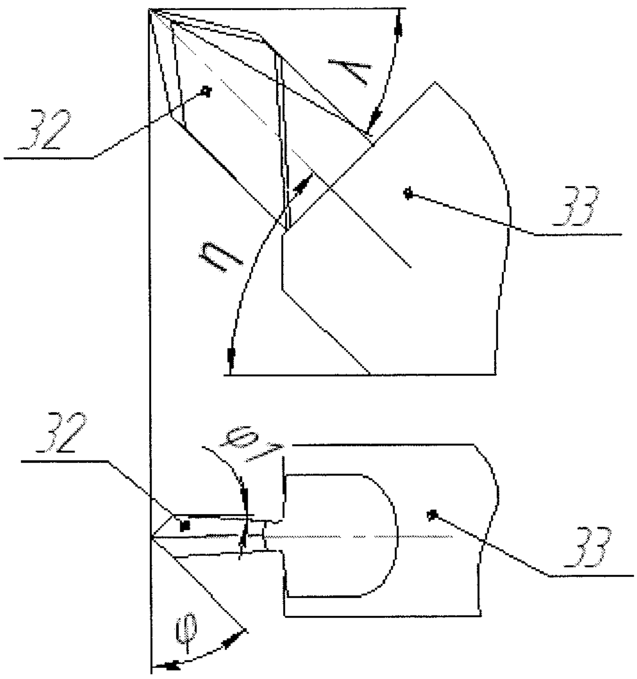


FIG. 28

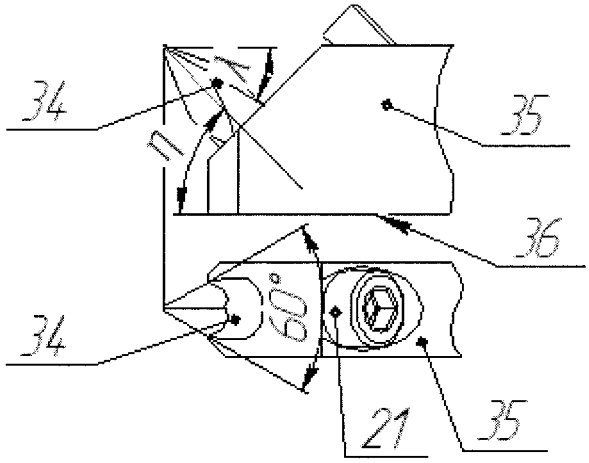


FIG. 29

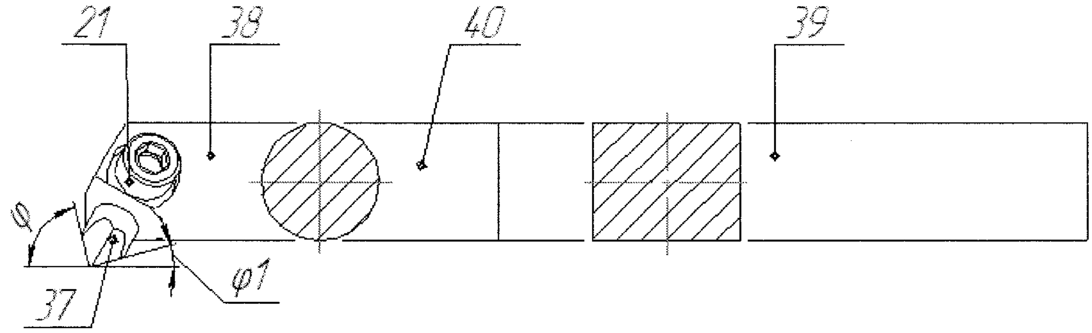


FIG. 30

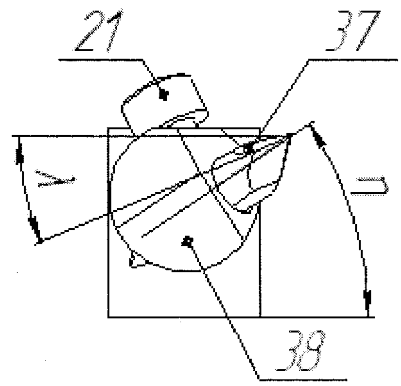


FIG. 31

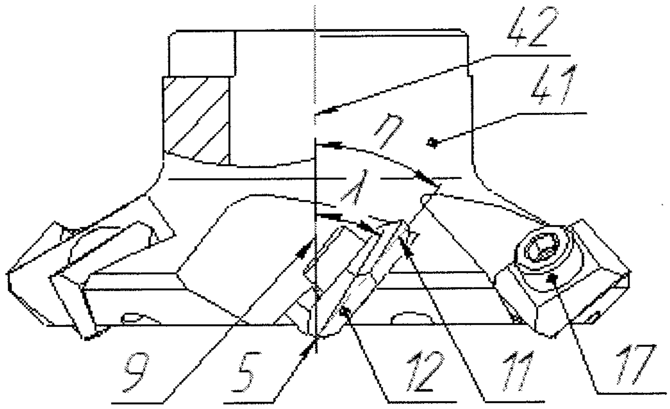


FIG. 32

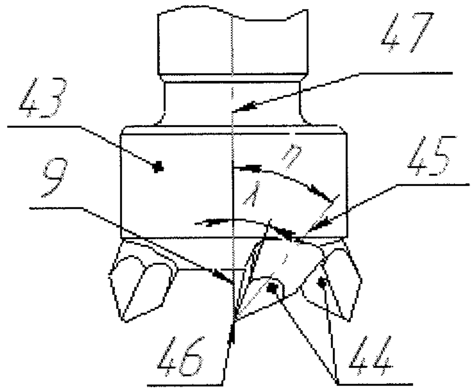


FIG. 33

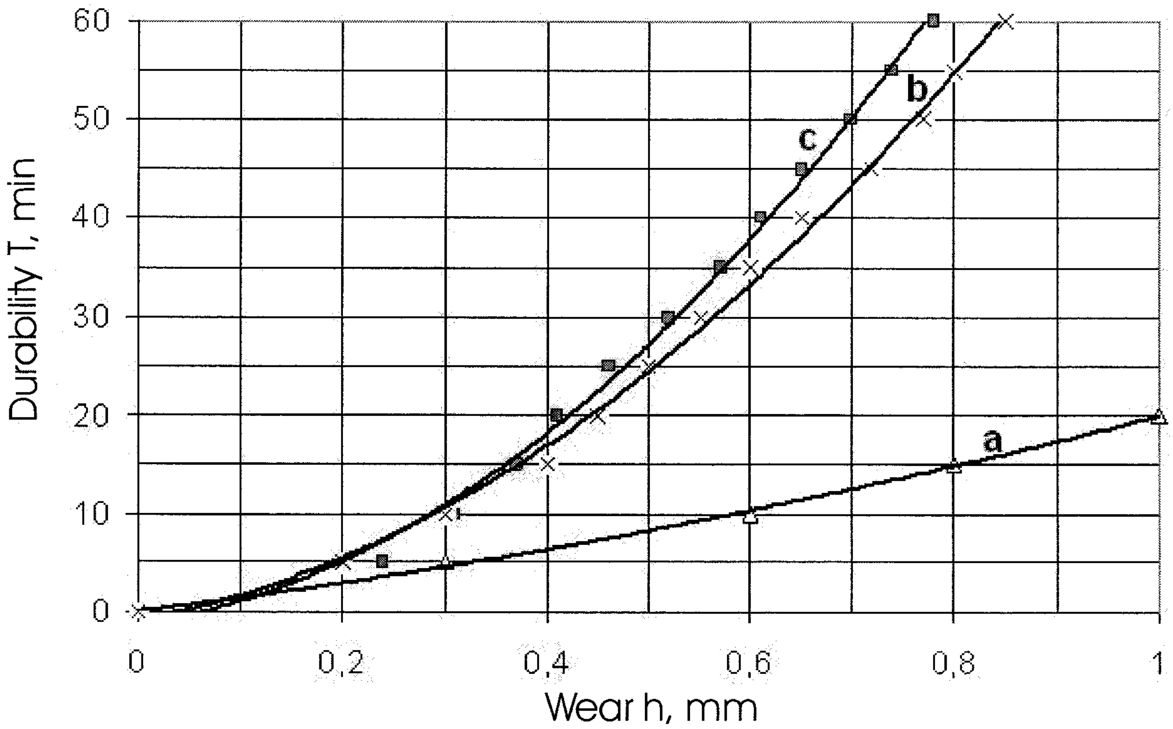
Durability T, min
60
50
40
30
20
10
0
0
0,2
0,4
0,6
0,8
1
Wear h, mm
a
b
c

FIG. 34

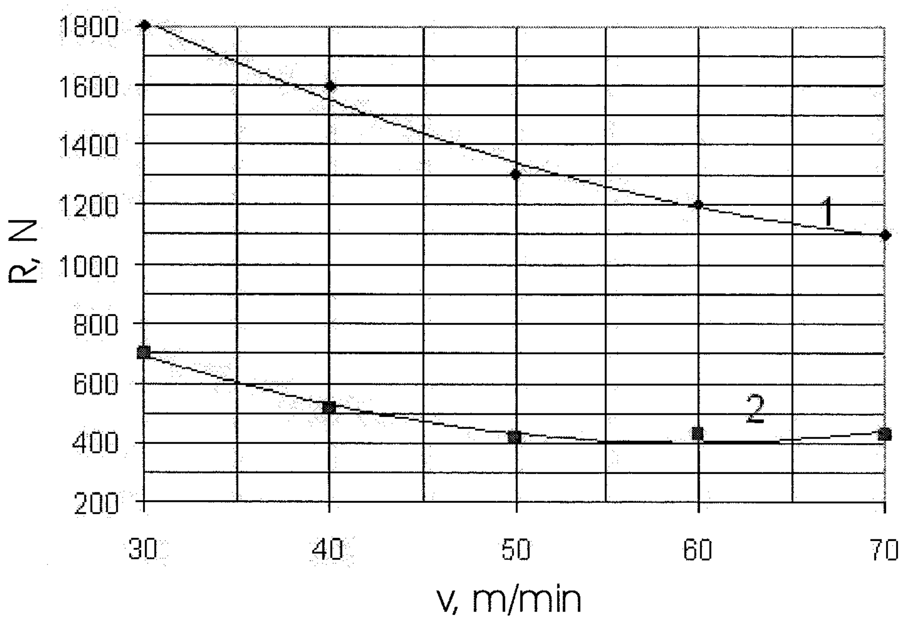
R, N
1800
1600
1400
1200
1000
800
600
400
200
30
40
50
60
70
v, m/min
1
2

FIG. 35

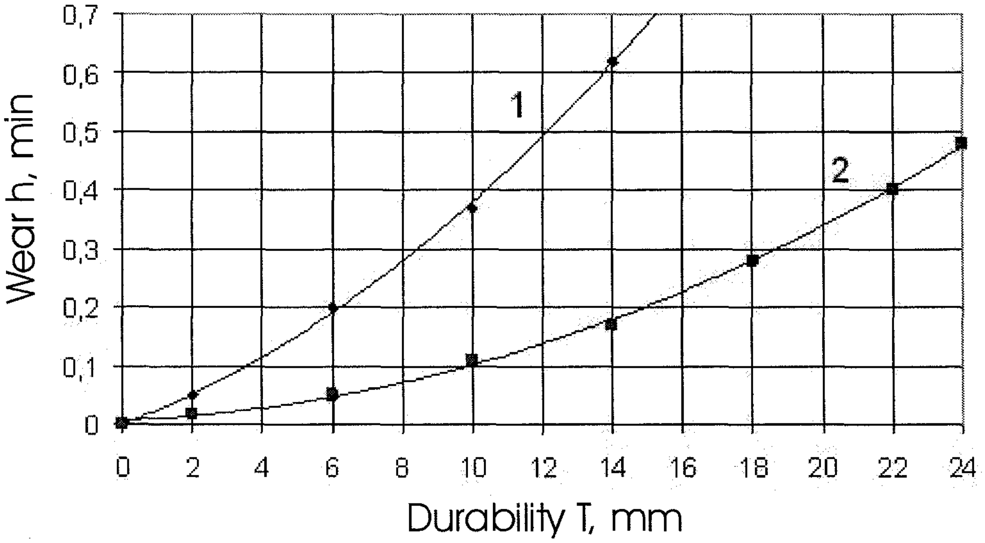
0,7
0,6
0,5
0,4
0,3
0,2
0,1
0
Wear h, min
1
2
0 2 4 6 8 10 12 14 16 18 20 22 24
Durability T, mm

FIG. 36

**INTERNATIONAL SEARCH REPORT**

International application No.
PCT/RU 2013/000802

A. CLASSIFICATION OF SUBJECT MATTER

***B23B 1/00*** *(2006.01)*
***B23B 27/00*** *(2006.01)*
***B23C 5/00*** *(2006.01)*

According to International Patent Classification (IPC) or to both national classification and IPC

B. FIELDS SEARCHED

Minimum documentation searched (classification system followed by classification symbols)

B23B 1/00, 27/00-27/22, 29/00-29/22, 51/00-51/14, B23C 5/00-5/24

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE, Information Retrieval System of FIPS

C. DOCUMENTS CONSIDERED TO BE RELEVANT

| Category* | Citation of document, with indication, where appropriate, of the relevant passages | Relevant to claim No. |
|---|---|---|
| X<br>Y | RU 87377 U1 (MELNIKOV MIKHAIL BORISOVICH) 10.10.2009, the claims, drawings | 1, 3<br>2, 4, 5 |
| Y | UA 42003 C2 (ASSOTSIATSIA "PROGRESS") 15.10.2001, the claims, drawings | 2, 4, 5 |
| A | SU 93920 A1 (V. M. VOROBEV et al.) 30.11.1951 | 1-5 |
| A | SU 1006072 A (V. P. VILKOV et al.) 23.03.1983 | 1-5 |
| A | US 2848787 A (WESTERNELECTRIC COMPANY, INCORPORATED) 26.08.1958 | 1-5 |

☐ Further documents are listed in the continuation of Box C. ☐ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 17 December 2013 (17.12.2013) | 26 December 2013 (26.12.2013) |
| Name and mailing address of the ISA/<br>RU<br>Facsimile No. | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- RU 2163857
- US 20020170396 A
- RU 2015861
- RU 2334592
- RU 2206433
- US 6343898 B
- JP 61226202 A
- US 4572042 A
- US 2849787 A
- US 6579042 B
- DE 10027945
- DE 3910288
- RU 2348492
- RU 2348491
- UA 42003
- SU 93920
- SU 1006072
- RU 2266175
- UA 11733
- RU 2380197
- RU 87377